# EUROPEAN PATENT SPECIFICATION

(11) **EP 1 900 830 B1**
(45) Date of publication and mention of the grant of the patent: **10.11.2010**
(21) Application number: 07291081.3
(22) Date of filing: 10.09.2007
(51) Int. Cl.: C21D 9/04

(54) **Method and apparatus for heat treatment of steel rail**
Verfahren und Vorrichtung zur Wärmebehandlung von Stahlschienen
Procédé et appareil pour le traitement thermique d'un rail d'acier

(30) Priority: 12.09.2006 CN 200610021821
(43) Date of publication of application: 19.03.2008
(73) Proprietor: Panzhihua Iron and Steel (Group) Corporation, East District Panshihua Sichuan 617067 (CN)
(72) Inventor: Zhan, Jinlong, Panzhihua, Sichuan Province 617067 (CN)
(74) Representative: Neyret, Daniel Jean Marie

(56) References cited:
- EP-A- 0 098 492
- WO-A-03/028912
- DE-A1- 3 006 695
- US-A- 4 933 024

## Description

### TECHNICAL FIELD

The present invention relates to a heat treatment method of steel rail and a heat treatment apparatus of steel rail using the method.

### BACKGROUND

There have been increasing requirements for steel rails as the railway transportation tends to high speed and heavy load. Years of study and application practice has shown: the heat treatment can produce fine pearlite metallographic structure of steel rails and afford desired mechanical properties to steel rails; it is a powerful means for improving service life of steel rails. In the prior art, there are mainly two ways for heat treatment of steel rails: one way is to reheat the rolled steel rail finished product having normal temperature (also referred to as "off-line heat treatment process); Another way is to utilize the residual heat of rolling process to heat the steel rails on the steel rolling production line (also referred to as "on-line heat treatment process"). These techniques can be seen from the content disclosed in CN 1083013C and the References cited in the Background Part of CN 1083013C.

From DE 30 06 695 A, an online heat treatment process and apparatus is known, whereby the rail is cooled from the rolling temperature to the end of the γ/α-transformation, the rail head is reheated above the austenitising temperature and forcibly cooled with air or air/water mixtures.

The off line heat treatment process can afford fine pearlitic microstructure and therefore the hardened layer may have higher strength, toughness and hardness because the rolled steel rail experiences two phase transition processes. However, the off-line heat treatment process has the following inherent drawbacks: high energy consumption, shallow hardened layer, existence of a softened belt in the transitional zone between the hardened layer and the non-hardened layer, and low steel rail straightness since the steel rail straightness is ensured by roller straightening which can only be carried out once for the same steel rail; the steel rail has been roller straightened before heat treatment, and therefore it can't be roller straightened again after heat treatment.

The on-line heat treatment process is featured with low energy consumption, deep hardened layer, smooth transition of structure and hardness of the rail head of steel rail, free of hardness caving and softened belt, and high straightness.

### SUMMARY OF THE INVENTION

An object of the present invention is to provide a heat treatment method of steel rail, which can not only make the metallographic structure of the produced steel rails more fine to improve service life of the steel rails, but also reduce energy consumption and steel rail heat treatment cost.

Accordingly, the present invention provides a heat treatment method of steel rail as defined by claim 1.

The present invention also provides a heat treatment apparatus of steel rail, which is defined by claim 4.

The present invention has the following benefits: since the steel rail experiences the second heat treatment process by reheating just after it is heat treated using the residual heat of rolling, phase transition occurs in the steel rail in the two rapid cooling processes, and finer metallographic structure is obtained in the steel rail, and thereby the wear resistant property, contact fatigue resistant property, and service life of the steel rail are improved and are higher than those of the heat-treated steel rails produced through the prior on-line heat treatment process or off-line heat treatment process. When the steel rail experiences the second heat treatment process, the rail web and the middle part of the rail head have already been at high temperature, therefore the energy consumption in reheating can be reduced by 70% compared with the off line heat treatment process; therefore, the steel rail production cost can be reduced.

### BRIEF DESCRIPTION OF THE DRAWINGS

Fig. 1 is a schematic plan layout of a heat treatment apparatus of steel rail provided in the present invention;
Fig. 2 is a schematic plan layout of another heat treatment apparatus of steel rail provided in the present invention;
Fig. 3 is a schematic cross sectional view of the front supporting unit in the heat treatment apparatus of steel rail in the present invention;
Fig. 4 is a schematic top view of the hot straightening unit in the heat treatment apparatus of steel rail in the present invention;
Fig. 5 is a schematic cross sectional view of the first air cooling unit (second air cooling unit) in the heat treatment apparatus of steel rail in the present invention;
Fig. 6 is a schematic cross sectional view of the translating unit in the heat treatment apparatus of steel rail in the present invention;
Fig. 7 is a schematic cross sectional view of the heating unit in the heat treatment apparatus of steel rail in the present invention.

### List of reference numbers:

1. steel rail; 2. extended roller track of the rolling production line; 10. front supporting unit; 11. steel rail tilter; 12. front roller track; 13. steel rail lifter; 20. hot straightening unit; 21. active straightening roller; 22. passive straightening roller; 30. first air cooling unit; 31. first jetting air cooler; 32. second jetting air cooler; 33. third jetting air cooler; 34. upper guide mechanism; 35. lower guide mechanism; 40. translating unit; 41. quick steel raising and shifting machine; 50. heating unit; 51. intermediate frequency induction heater; 52. upper guide mechanism; 53. lower guide mechanism; 60. second air cooling unit; 70. collection rack.

### DETAILED DESCRIPTION OF EMBODIMENTS

Hereunder, the present invention will be described in detail according to the embodiments with reference to the accompanying drawings.

The heat treatment method of steel rail provided in the present invention comprises the following steps:
(1) keeping the rolled hot steel rail running continuously, and performing hot straightening process for it;
(2) performing the first heat treatment process for the rolled hot steel rail after the hot straightening process, i.e., forced cooling the rail head and the rail base of the steel rail in a jetting air cooling manner; and
(3) performing second heat treatment process for the steel rail after the first heat treatment process, i.e., heating the rail head of the steel rail to a temperature of 850~950°C, and then forced cooling the rail head of the steel rail in a jetting air cooling manner to a temperature that is close to the temperature of the rail base of the steel rail.

Generally speaking, a steel rail comprises the rail head, the rail web and the rail base along the cross section; wherein, the rail head refers to the head part facing upwards when the steel rail is mounted; the rail base refers to the bottom part that is connected to the ground base; the rail web refers to the middle part between the rail head and the rail base.

Generally, the rolled hot steel rail is at 800°C temperature or above, for example, 860~1200°C. During hot straightening process, the steel rail temperature can be equal to or slightly lower than the temperature after rolling process, for example, 750~850°C. In the first heat treatment process at said step (2), the rail head and rail base are cooled at a rate of 1~5°C/s for 90~130s and the temperature after cooling is 450~600°C. In the second heat treatment process at said step (3), the rail head is cooled at a rate of 1~5°C/s for 90~130s and the temperature after cooling is 450~600°C. In said second heat treatment process, preferably an intermediate frequency induction heater can be used to heat the rail head.

After the second heat treatment process at said step (3), subsequent finishing works can be performed for the steel rail after the steel rail is cooled to the normal temperature.

In the heat treatment method of steel rail provided in the present invention, since the steel rail experiences the second heat treatment process by reheating just after it is heat treated using the residual heat of rolling, phase transition occurs in the steel rail in the two rapid cooling processes, and finer metallographic structure is obtained in the steel rail, and thereby the wear resistant property, contact fatigue resistant property, and service life of the steel rail are improved and are higher than those of the heat-treated steel rails produced through the prior on-line heat treatment process or off-line heat treatment process. When the steel rail experiences the second heat treatment process, the rail web and the middle part of the rail head have already been at high temperature, therefore the energy consumption in reheating can be reduced by 70% compared with the off-line heat treatment process; therefore, the steel rail production cost can be reduced.

### Example 1:

Chemical composition of steel rail: C: 0.71~0.80%; Si: 0.50~0.80%; Mn: 0.75~1.05%; P: ≤0.030%; S: ≤0.030%; V: 0.04~0.12%, the rest: iron and trace impurities. The steel rail heat treatment processes are: when the rolled hot steel rail is cooled to a temperature of 810°C~790°C, perform hot straightening on the steel rail; perform first heat treatment process, i.e., forced cooling the rail head and the rail base of the steel rail in a jetting air cooling manner at a rate of about 3°C/s to a temperature of about 550°C; perform the second heat treatment process, i.e., heat the rail head to a temperature of 870°C, and then forced cooling the rail head in a jetting air cooling manner at a rate of about 3°C/s to the temperature close to the rail base temperature (about 450°C); after the steel rail is cooled to the normal temperature, perform subsequent finishing works for the steel rail. After the two heat treatment processes, the mechanical properties of the steel rail are: yield strength Rp0.2≥900MPa, tensile strength Rm≥1300MPa, and elongation A≥12%.

### Example 2:

Chemical composition of steel rail: C: 0.65~0.77%; Si: 0.15~0.35%; Mn: 1.10~1.50%; P: ≤0.035%; S: ≤0.035%; the rest: iron and trace impurities. The steel rail heat treatment processes are: when the rolled hot steel rail is cooled to a temperature of 810°C~790°C, perform hot straightening to the steel rail; perform first heat treatment process, i.e., forced cooling the rail head and the rail base in a jetting air cooling manner at a rate of about 3°C/s to a temperature of about 550°C; perform second heat treatment process, i.e., heat the rail head to a temperature of 870°C, and then forced cooling the rail head in a jetting air cooling manner at a rate of about 3°C/s to the temperature close to the rail base temperature (about 450°C); after the steel rail is cooled to the normal temperature, perform subsequent finishing works for the steel rail. The mechanical properties of the steel rail are: Rp0.2≥800MPa, Rm≥1200MPa, and A≥10%.

Hereunder, the present heat treatment apparatus of steel rail will be described in the embodiments, with reference to the accompanying drawings.

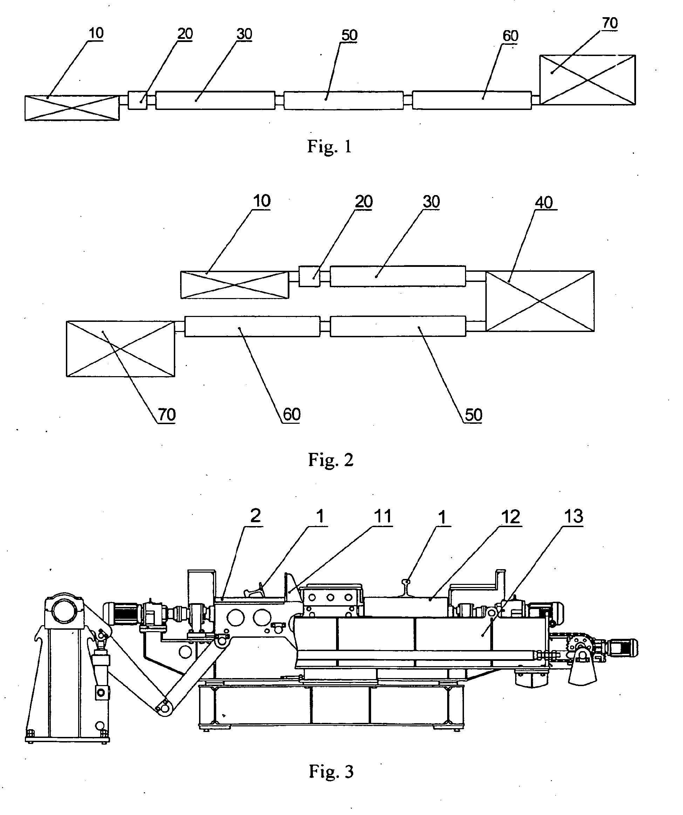

As shown in Fig. 1 and Fig. 2, the heat treatment apparatus of steel rail provided in the present invention is arranged following the steel rail rolling production line, comprising a front supporting unit 10, a hot straightening unit 20, a first air cooling unit 30, a heating unit 50, and a second air cooling unit 60 that are arranged in the order of the heat treatment processes of the steel rail. In addition, a collection rack 70 can be arranged after the second air cooling unit 60 as required. Hereunder, a heat treatment apparatus of steel rail with a collection rack 70 will be described; however, it shall not be understood that the collection rack 70 is a necessary component of the present invention.

The front supporting unit 10, the hot straightening unit 20, the first air cooling unit 30, the heating unit 50, the second air cooling unit 60, and the collection rack 70 can be arranged in different layout schemes, depending on the condition in the production workshop.

As shown in Fig. 1, the front supporting unit 10, the hot straightening unit 20, the first air cooling unit 30, the heating unit 50, the second air cooling unit 60 and the collection rack 70 are arranged orderly and linearly in the direction of the steel rail rolling production line. Such an arrangement is suitable for the case that the longitudinal length of the production shop is enough.

Alternatively, as shown in Fig.2, the front supporting unit 10, the hot straightening unit 20 and the first air cooling unit 30 are arranged orderly and linearly in the direction of the steel rail rolling production line; the heating unit 50, the second air cooling unit 60 and the collection rack 70 are arranged orderly and linearly opposite to the direction of the steel rail rolling production line. In such a case, a translating unit 40 can be provided between the outlet of the first air cooling unit 30 and the inlet of the heating unit 50, to translate conveniently and quickly the steel rail 1 from the first air cooling unit 30 to the heating unit 50. Such an arrangement is suitable for the case that the longitudinal length of the production workshop is not enough, and it is helpful to utilize the width of the production workshop reasonably and effectively.

Hereunder, the units of the heat treatment apparatus of steel rail will be described in the embodiments, with reference to the accompanying drawings.

Fig. 3 is a schematic cross sectional view of the front supporting unit 10. As shown in Fig. 3, the front supporting unit 10 mainly comprises a steel rail tilter 11, a steel rail lifter 13, and a front roller track 12. The steel rail tilter 11 is provided to turn the steel rail 1 to the state in which the rail head points upwards; then, the steel rail lifter 13 lifts the steel rail 1 onto the front roller track 12; next, the front roller track 12 conveys the steel rail 1 to the hot straightening unit 20. The steel rail tilter 11, the steel rail lifter 13, and the front roller track 12 are known to those skilled in the art, and thereby will not be further described here.

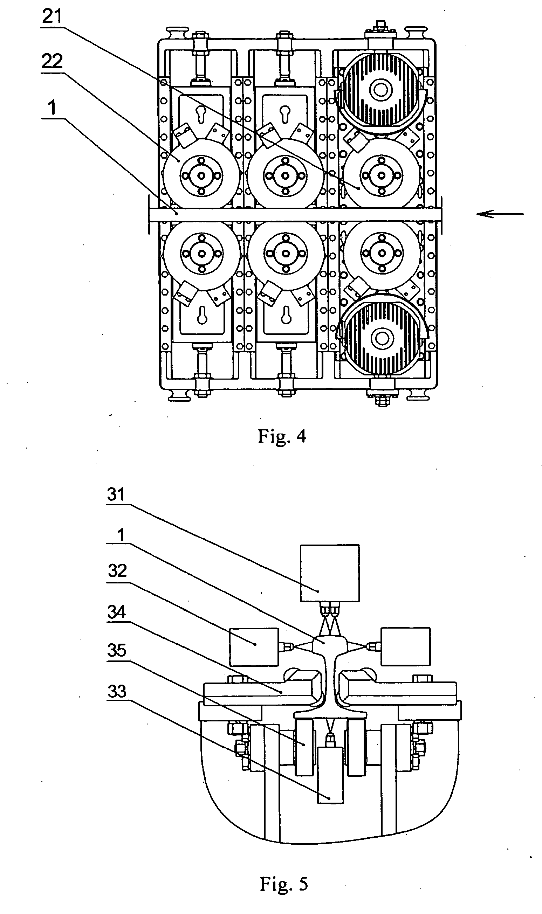

Fig. 4 is a schematic top view of the hot straightening unit 20. As shown in Fig. 4, the hot straightening unit 20 mainly comprises at least three pairs of active straightening rollers 21 and passive straightening rollers 22 arranged spacing apart each other in the convey direction of the steel rail 1. The steel rail 1 conveyed from the front supporting unit 10 can be kept in straight and level state by the active straightening rollers 21 and the passive straightening rollers 22 when it is hot straightened. The active straightening rollers 21 and the passive straightening rollers 22 are known to those skilled in the art, and thereby will not be further described here.

Fig. 5 is a schematic cross sectional view of the first air cooling unit 30. As shown in Fig. 5, the first air cooling unit 30 mainly comprises an upper guide mechanism 34, a lower guide mechanism 35, a first jetting air cooler 31, a second jetting air cooler 32, and a third jetting air cooler 33. The upper guide mechanism 34 and the lower guide mechanism 35 are provided to keep the steel rail 1 in straight and level state as required when the steel rail 1 runs through the first air cooling unit 30. The first jetting air cooler 31 is disposed above the rail head and jets air towards and cools the top surface of the rail head. The second jetting air cooler 32 is arranged on both sides of the rail head to jet air towards and cool both sides of the rail head. The third jetting air cooler 33 is disposed below the rail base and jets air towards and cools the rail base. The rail head and the rail base are cooled by force with the first jetting air cooler 31, the second jetting air cooler 32, and the third jetting air cooler 33.

The second air cooling unit 60 can be in the same structure as the first air cooling unit 30; therefore, the drawing and description thereof is omitted here. In addition, the guide mechanisms and the jetting air coolers are known to those skilled in the art, and therefore will not be described further here.

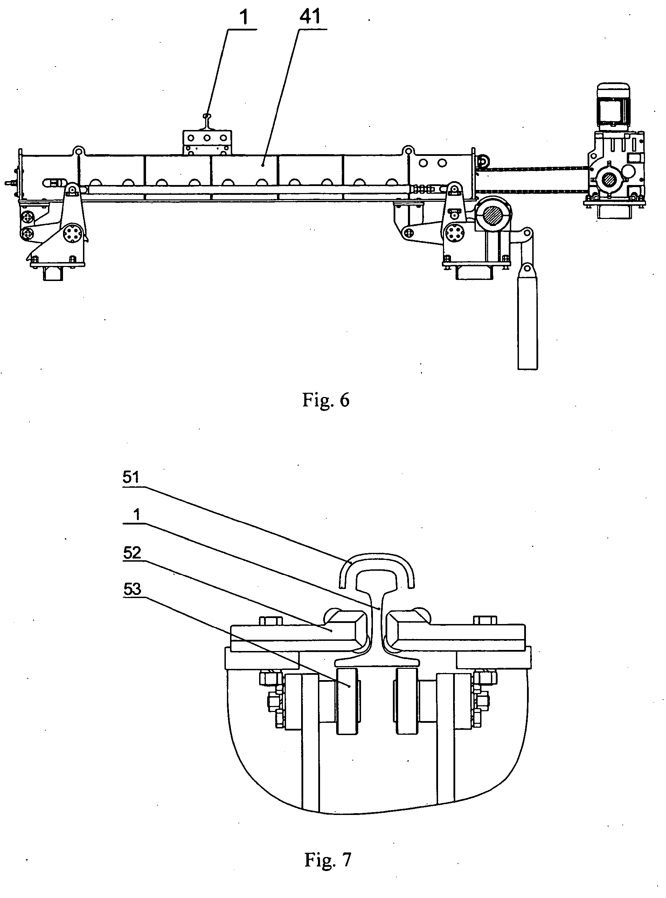

Fig. 6 is a schematic cross sectional view of the translating unit 40. As shown in Fig. 6, the translating unit 40 mainly comprises a quick steel raising and shifting machine 41, which is provided to translate the steel rail 1 quickly. The quick steel raising and shifting machine 41 is known to those skilled in the art, such as the one disclosed by CN 1847115A, and thereby will not be described further here.

Fig. 7 is a schematic cross sectional view of the heating unit 50. As shown in Fig. 7, the heating unit 50 mainly comprises a heater 51, an upper guide mechanism 52, and a lower guide mechanism 53. Preferably, the heater 51 is an intermediate frequency induction heater 51 provided to heat the rail head of the steel rail. The upper guide mechanism 52 and the lower guide mechanism 53 are provided to keep the steel rail 1 in straight and level state as required when the steel rail 1 runs through the heater unit 50.

The collection rack 70 is provided to receive the steel rail 1 after heat treatment, so that the steel rail 1 is cooled to the normal temperature on the collection rack 70 and then treated through subsequent straightening, rail end machining, inspection, and finishing works; finally, heat-treated steel rails with long service life will be provided for the railway use.

Hereunder, the application of the heat treatment apparatus of steel rail in the present invention will be further described.

As shown in Figs. 1, 2, and 3, during the steel rail heat treatment process, the hot steel rail 1 is conveyed through the extended roller track 2 of the rolling production line to the front supporting unit 10 of the heat treatment apparatus. When the steel rail 1 reaches the front supporting unit 10, it is turned by the steel rail tilter 11 to the state in which the rail head faces upwards; then, the steel rail 1 is lifted by the steel rail lifter 13 onto the front roller track 12.

When the steel rail 1 is cooled to the temperature of about 810°C~790°C, it is conveyed through the front roller track 12 to the hot straightening unit in the direction indicated by the arrow in Fig. 4; here, the steel rail 1 is hot straightened by the active straightening rollers 21 and the passive straightening rollers 22 to be straight and level.

As shown in Fig. 5, the hot straightened steel rail 1 is conveyed to the first air cooling unit 30; under control of the upper guide mechanism 34 and the lower guide mechanism 35, the steel rail 1 is kept in straight and level state and runs through the first air cooling unit 30. Meanwhile, under the control of the first, second and third jetting air coolers 31, 32 and 33, the rail head and the rail base are cooled by force at a rate of 1~5°C/s for the first heat treatment process; the steel rail 1 is cooled to the temperature of about 500~600°C preferably.

As shown in Fig. 6, when the steel rail 1 leaves the first air cooling unit 30 and arrives at the translating unit 40, the first phase transition process is accomplished in the rail head and the rail base of the steel rail 1; the quick steel raising and shifting machine 41 of the translating unit 40 translates the steel rail 1 quickly to the downstream heating unit 50.

As shown in Fig. 7, after the steel rail 1 is fed into the heating unit 50, it is kept in straight and level state under control of the upper guide mechanism 52 and the lower guide mechanism 53. Meanwhile, the rail head of the steel rail 1 is heated by the intermediate frequency induction heater 51 to the temperature of about 870°C.

As shown in Fig. 5, after the steel rail 1 leaves the heating unit 50 and enters into the second air cooling unit 60, it is kept in straight and level state and runs through the second air cooling unit 60 under control of the upper guide mechanism 34 and the lower guide mechanism 35. Meanwhile, under the control of the jetting air coolers 31 and 32, the rail head of the steel rail 1 is cooled by force at a rate of 1~5°C/s for the second heat treatment process; the steel rail is cooled to the temperature of about 450~600°C preferably. At that time, the jetting air cooler 33 below the steel rail 1 can jet air towards the rail base of the steel rail 1 appropriately, so that the temperature of the rail head is close to the temperature of the rail base when the steel rail 1 leaves the second air cooling unit 60, and the steel rail 1 can enter into the collection rack 70 straightly.

After the steel rail 1 is cooled to the normal temperature on the collection rack 70, it can be treated through straightening, rail end machining, inspection, and finishing processes; therefore, heat-treated steel rails with long service life can be provided for railway use.

## Claims

1. A heat treatment method of steel rail, comprising the steps of:
(1) keeping the rolled hot steel rail running continuously, and performing hot straightening process for it;
(2) performing first heat treatment process for the rolled hot steel rail after the hot straightening process, i.e., forced cooling the rail head and the rail base of the steel rail in a jetting air cooling manner; and
(3) performing second heat treatment process for the steel rail after the first heat treatment process, i.e., heating the rail head of the steel rail to a temperature of 850-950°C, and then forced cooling the rail head of the steel rail in a jetting air cooling manner to a temperature that is close to the temperature of the rail base of the steel rail,
wherein, in the first heat treatment process at step (2), the rail head and the rail base of the steel rail are cooled at a rate of 1∼5°C/s for 90∼130s to a temperature of 500∼600 °C, and
wherein, in the second heat treatment process at step (3), the rail head of the steel rail is cooled at a rate of 1∼5 °C/s for 90∼130s to a temperature of 450∼600 °C.

2. The method of claim 1, wherein, in the second heat treatment process at step (3), an intermediate frequency induction heater is used to heat the rail head of the steel rail.

3. The method of claim 1, wherein, after the second heat treatment process at said step (3), subsequent finishing works are performed for the steel rail after the steel rail is cooled to the

4. A heat treatment apparatus of steel rail, which is arranged following the steel rail rolling production line, comprising a front supporting unit (10), a hot straightening unit (20), a first air cooling unit (30), a heating unit (50), and a second air cooling unit (60) that are arranged in the order of the heat treatment processes of the steel rail, wherein:
said front supporting unit (10) comprises a steel rail tilter (11) provided to turn the steel rail (1) to the state where the rail head of the steel rail faces upwards, a steel rail lifter (13) provided to lift the steel rail (1) onto the front roller track (12), and the front roller track (12) provided to convey the steel rail (1) to the hot straightening unit (20);
said hot straightening unit (20) comprises at least three pairs of active straightening rollers (21) and passive straightening rollers (22) arranged spacing apart each other in the convey direction of the steel rail;
said first air cooling unit (30) and said second air cooling unit (60) each comprises an upper guide mechanism (34) and a lower guide mechanism (35) provided to constrain the movement tract of the steel rail (1), a first jetting air cooler (31) disposed above the rail head 5 of the steel rail (1) to jet air towards and cool the top surface of the rail head, a second jetting air cooler (32) disposed at both sides of the rail head of the steel rail (1) to jet air towards and cool both sides of the rail head, and a third jetting air cooler (33) disposed below the rail base of the steel rail (1) to jet air towards and cool the rail base;
said heating unit (50) comprises an upper guide mechanism (52) and a lower guide mechanism (53) provided to constrain the movement trace of the steel rail (1), and a heater (51) provided to heat the rail head of the steel rail (1).

5. The apparatus of claim 4, wherein:
the front supporting unit (10), the hot straightening unit (20), the first air cooling unit (30), the heating unit (50), and the second air cooling unit (60) are arranged orderly and linearly in the direction of the steel rail rolling production line.

6. The apparatus of claim 4, wherein:
the front supporting unit (10), the hot straightening unit (20) and the first air cooling unit (30) are arranged orderly and linearly in the direction of the steel rail rolling production line;
the heating unit (50) and the second air cooling unit (60) are arranged orderly and linearly opposite to the direction of the steel rail rolling production line; and
a translating unit (40) is provided between the outlet of the first air cooling unit (30) and the inlet of the heating unit (50).

7. The apparatus of claim 4, wherein, said heater (51) is an intermediate frequency induction heater (51).

8. The apparatus of claim 6, wherein, said translating unit (40) comprises a quick steel raising and shifting machine (41).

9. The apparatus of claim 4, wherein, a collection rack (70) is provided after said second air cooling unit (60).

## Patentansprüche

1. Stahlschienen-Wärmebehandlungsverfahren, das die Schritte umfasst, dass:
(1) die gewalzte warme Stahlschiene ununterbrochen am Laufen gehalten wird und ein Warmrichtprozess für sie ausgeführt wird;
(2) ein erster Wärmebehandlungsprozess für die gewalzte warme Stahlschiene nach dem Warmrichtprozess ausgeführt wird, d.h. eine Zwangsabkühlung des Schienenkopfes und der Schienenbasis der Stahlschiene in der Art und Weise einer Luftstrahlkühlung; und
(3) ein zweiter Wärmebehandlungsprozess für die Stahlschiene nach dem ersten Wärmebehandlungsprozess ausgeführt wird, d.h. der Schienenkopf der Stahlschiene auf eine Temperatur von 850 - 950°C erwärmt wird und dann der Schienenkopf der Stahlschiene in der Art und Weise einer Luftstrahlkühlung auf eine Temperatur zwangsabgekühlt wird, die nahe bei der Temperatur der Schienenbasis der Stahlschiene liegt,
wobei der Schienenkopf und die Schienenbasis der Stahlschiene im ersten Wärmebehandlungsprozess bei Schritt (2) mit einer Rate von 1 - 5°C/Sekunde für 90 - 130 Sekunden auf eine Temperatur von 500 - 600°C abgekühlt werden, und
wobei der Schienenkopf der Stahlschiene im zweiten Wärmebehandlungsprozess bei Schritt (3) mit einer Rate von 1 - 5°C/Sekunde für 90 - 130 Sekunden auf eine Temperatur von 450 - 600°C abgekühlt wird.

2. Verfahren nach Anspruch 1,
wobei im zweiten Wärmebehandlungsprozess bei Schritt (3) ein Zwischenfrequenzinduktionsheizgerät verwendet wird, um den Schienenkopf der Stahlschiene zu erwärmen.

3. Verfahren nach Anspruch 1,
wobei nach dem zweiten Wärmebehandlungsprozess bei Schritt (3) anschließende Abschlussarbeiten für die Stahlschiene ausgeführt werden, nachdem die Stahlschiene auf die normale Temperatur abgekühlt ist.

4. Stahlschienen-Wärmebehandlungsvorrichtung, die so angeordnet ist, dass sie der Walzproduktionslinie der Stahlschienen folgt, umfassend eine Frontstützeinheit (10), eine Warmrichteinheit (20), eine erste Luftkühlungseinheit (30), eine Heizungseinheit (50) und eine zweite Luftkühlungseinheit (60), die in der Reihenfolge der Wärmebehandlungsprozesse der Stahlschiene angeordnet sind, wobei:
die Frontstützeinheit (10) eine Stahlschienen-Kippvorrichtung (11), die zum Drehen der Stahlschiene (1) in den Zustand bereitgestellt ist, bei dem der Schienenkopf der Stahlschiene nach oben weist, einen Stahlschienenheber (13), der zum Heben der Stahlschiene (1) auf die Frontrollbahn (12) bereitgestellt ist, und die Frontrollbahn (12) umfasst, die zum Befördern die Stahlschiene (1) zu der Warmrichteinheit (20) bereitgestellt ist;
die Warmrichteinheit (20) mindestens drei Paare aktiver Richtrollen (21) und passiver Richtrollen (22) umfasst, die voneinander beabstandet in der Förderrichtung der Stahlschiene angeordnet sind;
die erste Luftkühlungseinheit (30) und die zweite Luftkühlungseinheit (60) jeweils einen oberen Führungsmechanismus (34) und einen unteren Führungsmechanismus (35), die zur Beschränkung des Bewegungsgebiets der Stahlschiene (1) bereitgestellt sind, einen ersten Luftstrahlkühler (31), der über dem Schienenkopf der Stahlschiene (1) angeordnet ist, um Luft an die obere Oberfläche des Schienenkopfs zu blasen und diese zu kühlen, einen zweiten Luftstrahlkühler (32), der an beiden Seiten des Schienenkopfs der Stahlschiene (1) angeordnet ist, um Luft an beide Seiten des Schienenkopfes zu blasen und diese zu kühlen, und einen dritten Luftstrahlkühler (33) umfassen, der unter der Schienenbasis der Stahlschiene (1) angeordnet ist, um Luft an die Schienenbasis zu blasen und diese zu kühlen;
die Heizungseinheit (50) einen oberen Führungsmechanismus (52) und einen unteren Führungsmechanismus (53), die bereitgestellt sind, um das Bewegungsgebiet der Stahlschiene (1) einzuschränken, und ein Heizgerät (51) umfasst, das zum Erwärmen des Schienenkopfes der Stahlschiene (1) bereitgestellt ist.

5. Vorrichtung nach Anspruch 4, wobei:
die Frontstützeinheit (10), die Warmrichteinheit (20), die erste Luftkühlungseinheit (30), die Heizungseinheit (50) und die zweite Luftkühlungseinheit (60) der Reihe nach und linear in die Richtung der Walzproduktionslinie der Stahlschienen angeordnet sind.

6. Vorrichtung nach Anspruch 4, wobei:
die Frontstützeinheit (10), die Warmrichteinheit (20) und die erste Luftkühlungseinheit (30) der Reihe nach und linear in die Richtung der Walzproduktionslinie der Stahlschienen angeordnet sind;
die Heizungseinheit (50) und die zweite Luftkühlungseinheit (60) der Reihe nach und linear entgegengesetzt zu der Richtung der Walzproduktionslinie der Stahlschienen angeordnet sind; und eine Umsetzeinheit (40) zwischen dem Ausgang der ersten Luftkühlungseinheit (30) und dem Eingang der Heizungseinheit (50) bereitgestellt ist.

7. Vorrichtung nach Anspruch 4,
wobei das Heizgerät (51) ein Zwischenfrequenzinduktionsheizgerät (51) ist.

8. Vorrichtung nach Anspruch 6,
wobei die Umsetzeinheit (40) eine Maschine (41) zum schnellen Anheben und Umlagern von Stahl umfasst.

9. Vorrichtung nach Anspruch 4,
wobei ein Sammelabstellplatz (70) nach der zweiten Luftkühlungseinheit (60) bereitgestellt ist.

## Revendications

1. Procédé de traitement thermique de rail d'acier, comprenant les étapes consistant à :
(1) maintenir le rail d'acier chaud laminé en mouvement continu, et réaliser un procédé de dressage à chaud pour celui-ci ;
(2) réaliser un premier procédé de traitement thermique pour le rail d'acier chaud laminé après le procédé de dressage à chaud, à savoir, refroidir de façon forcée le champignon de rail et le patin de rail du rail d'acier par refroidissement par jet d'air ; et
(3) réaliser un second procédé de traitement thermique pour le rail d'acier après le premier procédé de traitement thermique, à savoir, chauffer le champignon de rail du rail d'acier jusqu'à une température de 850∼950°C, et puis refroidir de façon forcée le champignon de rail du rail d'acier par refroidissement par jet d'air jusqu'à une température qui est proche de la température du patin de rail du rail d'acier,
dans lequel, dans le premier procédé de traitement thermique à l'étape (2), le champignon de rail et le patin de rail du rail d'acier sont refroidis à une vitesse de 1∼5°C/s pendant 90-130s jusqu'à une température de 500∼600 °C, et
dans lequel, dans le second procédé de traitement thermique à l'étape (3), le champignon de rail du rail d'acier est refroidi à une vitesse de 1∼5°C pendant 90∼130s jusqu'à une température de 450∼600°C.

2. Procédé selon la revendication 1, dans lequel, dans le second procédé de traitement thermique, à l'étape (3), un four à induction à fréquence intermédiaire est utilisé pour chauffer le champignon de rail du rail d'acier.

3. Procédé selon la revendication 1, dans lequel, après le second procédé de traitement thermique, à ladite étape (3), des travaux de finitions suivants sont réalisés pour le rail d'acier après que le rail d'acier est refroidi jusqu'à la température normale.

4. Appareil de traitement thermique de rail d'acier, qui est agencé après la ligne de production de laminage de rail d'acier, comprenant une unité de support avant (10), une unité de dressage à chaud (20), une première unité de refroidissement par air (30), une unité de chauffage (50), et une seconde unité de refroidissement par air (60) qui sont agencées dans l'ordre des procédés de traitement thermique du rail d'acier, dans lequel :
ladite unité de support avant (10) comprend un dispositif d'inclinaison de rail d'acier (11) prévu pour tourner le rail d'acier (1) jusqu'à l'état où le champignon de rail du rail d'acier est tourné vers le haut, un dispositif de levage de rail d'acier (13) prévu pour lever le rail d'acier (1) sur le transporteur à rouleaux avant (12), et le transporteur à rouleaux avant (12) prévu pour transporter le rail d'acier (1) jusqu'à l'unité de dressage à chaud (20) ;
ladite unité de dressage à chaud (20) comprend au moins trois paires de rouleaux à dresser actifs (21) et rouleaux à dresser passifs (22) agencées de façon espacée les unes des autres dans la direction de transport du rail d'acier ;
ladite première unité de refroidissement par air (30) et ladite seconde unité de refroidissement par air (60) comprennent chacune un mécanisme de guidage supérieur (34) et un mécanisme de guidage inférieur (35) prévus pour limiter le mouvement du rail d'acier (1), un premier dispositif de refroidissement par jet d'air (31) disposé au-dessus du champignon de rail du rail d'acier (1) pour projeter de l'air vers et refroidir la surface supérieure du champignon de rail, un deuxième dispositif de refroidissement par jet d'air (32) disposé sur les deux côtés du champignon de rail du rail d'acier (1) pour projeter de l'air vers et refroidir les deux côtés du champignon de rail, et un troisième dispositif de refroidissement par jet d'air (33) disposé en dessous du patin de rail du rail d'acier (1) pour projeter de l'air vers et refroidir le patin de rail ;
ladite unité de chauffage (50) comprend un mécanisme de guidage supérieur (52) et un mécanisme de guidage inférieur (53) prévus pour limiter le mouvement du rail d'acier (1), et un four (51) prévu pour chauffer le champignon de rail du rail d'acier (1).

5. Appareil selon la revendication 4, dans lequel:
l'unité de support avant (10), l'unité de dressage à chaud (20), la première unité de refroidissement par air (30), l'unité de chauffage (50), et la seconde unité de refroidissement par air (60) sont agencées de façon ordonnée et linéaire dans la direction de la ligne de production de laminage de rail d'acier.

6. Appareil selon la revendication 4, dans lequel :
l'unité de support avant (10), l'unité de dressage à chaud (20) et la première unité de refroidissement par air (30) sont agencées de façon ordonnée et linéaire dans la direction de la ligne de production de laminage de rail d'acier ;
l'unité de chauffage (50) et la seconde unité de refroidissement par air (60) sont agencées de façon ordonnée et linéaire et de façon opposée à la direction de la ligne de production de laminage de rail d'acier ; et
une unité de translation (40) est prévue entre la sortie de la première unité de refroidissement par air (30) et l'entrée de l'unité de chauffage (50).

7. Appareil selon la revendication 4, dans lequel, ledit four (51) est un four à induction à fréquence intermédiaire (51).

8. Appareil selon la revendication 6, dans lequel ladite unité de translation (40) comprend une machine rapide de levage et de déplacement d'acier (41).

9. Appareil selon la revendication 4, dans lequel un support de collecte (70) est prévu après ladite seconde unité de refroidissement par air (60).
